# EUROPEAN PATENT APPLICATION

(11) **EP 4 458 689 A1**
(43) Date of publication of application: **06.11.2024**
(21) Application number: 24171097.9
(22) Date of filing: 18.04.2024
(51) Int. Cl.: B65B 9/12, B29C 65/00, B65B 9/20, B65B 51/30, B65B 57/00, B65B 61/06, B65B 61/24

(54) **PACKAGE FORMING APPARATUS FOR A PACKAGING MACHINE, PACKAGING MACHINE FOR FORMING PACKAGES FILLED WITH A POURABLE PRODUCT AND METHOD FOR FORMING PACKAGES**

(30) Priority: 26.04.2023 IT 202300008166
(71) Applicant: Tetra Laval Holdings & Finance S.A., 1009 Pully (CH)
(72) Inventor: POPPI, Marco, 41123 Modena (IT); ORSINI, Ivan, 41123 Modena (IT); GIAMPIERI, Andrea, 41123 Modena (IT); BORSARI, Roberto, 41123 Modena (IT); MAMELI, Alberto, 41123 Modena (IT); FORNASARI, Stefano, 41123 Modena (IT)
(74) Representative: Tetra Pak - Patent Attorneys SE

(57) **Abstract**

There is described a package forming apparatus (10) configured to manipulate a tube (4) extending along a central axis (A) for obtaining packages (2). The package forming apparatus (10) comprises at least one operative device (20) configured to at least partially form the tube (4) and the at least one operative device (20) comprises at least a first element (23) and a second element (24) configured to at least transversally compress the tube (4) along a respective cross-section (25). The package forming apparatus (10) comprises a control unit configured to selectively control each first element (23) and the respective second element (24) between a respective open configuration and a respective closed configuration. The control unit is also configured to move each first element (23) and the respective second element (24) along a displacement direction (D) transversal to the central axis (A) while each first element (23) and the respective second element (24) are in the closed configuration.

## Description

### TECHNICAL FIELD

The present invention relates to a package forming apparatus for a packaging machine for forming packages filled with a pourable product, preferentially a pourable food product.

Advantageously, the present invention also relates to a packaging machine for forming packages filled with a pourable product, preferentially a pourable food product.

Moreover, the present invention also relates to a method for forming packages filled with a pourable product, preferentially a pourable food product.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding laminated strip packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Each package comprises a bottom wall configured to be placed on a support surface, a top wall axially displaced from the bottom wall and a side wall connected to and interposed between the bottom wall and the top wall. There are known packages in which the bottom wall and the top wall are substantially parallel to one another and other packages in which the top wall is inclined with respect to the bottom wall. Packages of such latter type are, for example, the known Tetra Brik ^{®} Edge packages and the Tetra Brik ^{®} Aseptic Edge packages.

Packages of this sort are normally produced on fully automatic packaging machines, which advance a web of packaging material through a sterilization apparatus for sterilizing the web of packaging material at a sterilization station and to an isolation chamber (a closed and sterile environment) in which the sterilized web of packaging material is maintained and advanced. During advancement of the web of packaging material through the isolation chamber, the web of packaging material is folded and sealed longitudinally at a tube forming station to form a tube having a longitudinal seam portion, the tube being further fed along a vertical advancing direction.

For completing the forming operations, the tube is filled with a pourable product, in particular a pourable food product, and is transversally sealed and subsequently cut along equally spaced transversal cross sections within a package forming apparatus of the packaging machine during advancement along the vertical advancing direction.

Pillow packages are so obtained, each pillow package having a longitudinal sealing band, a top transversal sealing band and a bottom transversal sealing band.

Some types of packages come along with the bottom transversal sealing band and the top transversal sealing band being aligned with respect to one another and with respect to a longitudinal axis of the package, while this is not the case for other packages such as the Tetra Brik ^{®} Edge packages and the Tetra Brik ^{®} Aseptic Edge packages. In these cases, the top transversal sealing band is laterally displaced from the respective longitudinal axis.

A typical packaging machine comprises a conveying device for advancing the web of packaging material along a web advancement path and the tube formed from the web of packaging material along a tube advancement path, the sterilization apparatus for sterilizing the web of packaging material prior to its formation into the tube, a tube forming and sealing device at least partially arranged within the isolation chamber and being configured to form the tube from the advancing web of packaging material and to longitudinally seal the tube, a filling device for filling the tube with the pourable product and the package forming apparatus adapted to form, transversally seal and cut individual packages from the tube of packaging material.

The package forming apparatus comprises at least one operative device having at least a first operative group and a second operative group configured to at least partially form and to transversally seal and cut in cooperation the, in use, advancing tube.

In order to be able to form packages having a top transversal sealing band being laterally displaced from the longitudinal axis, it is necessary to incline the operative devices during the manipulation of the tube.

Even though the known package forming apparatuses and/or packaging machines work satisfactorily well, a desire is felt in the sector to further improve the known package forming apparatuses and/or the known packaging machines.

### DISCLOSURE OF INVENTION

It is therefore an object of the present invention to provide an improved package forming apparatus.

Additionally, it is an object of the present invention to provide an improved packaging machine.

Moreover, it is an object of the present invention to provide an improved method for forming packages filled with a pourable product.

According to the present invention, there is provided a package forming apparatus as claimed in claim 1.

Preferred non-limiting embodiments of the package forming apparatus are claimed in the claims being directly and indirectly dependent on claim 1.

According to the present invention, there is also provided a packaging machine according to claim 8.

According to the present invention, there is also provided a method according to claim 9.

Preferred embodiments of the method are claimed in the claims being directly and indirectly depending on claim 9.

### BRIEF DESCRIPTION OF THE DRAWINGS

Non-limiting embodiments of the present invention will be described by way of example with reference to the accompanying drawings, in which:
Figure 1 is a schematic view of a packaging machine having a package forming apparatus according to a first embodiment of the present invention, with parts removed for clarity;
Figure 2 is a schematic perspective view of a detail of the package forming apparatus of Figure 1, with parts removed for clarity;
Figures 3 to 6 are schematic views of the operation of a detail of the package forming apparatus of Figure 1, with parts removed for clarity; and
Figures 7 to 10 are schematic views of the operation of a detail of a package forming apparatus according to a second embodiment of the present invention, with parts removed for clarity.

### BEST MODES FOR CARRYING OUT THE INVENTION

Number 1 indicates as a whole a packaging machine for producing sealed packages 2 of a pourable product, in particular a pourable food product, such as milk, milk drinks, yoghurt, yoghurt drinks, fruit juice, wine, tomato sauce, emulsions, beverages containing pulp, salt, sugar, etc.

In more detail, packaging machine 1 may be configured to produce packages 2 from a multilayer packaging material; preferentially, a multilayer packaging material having heat-seal properties (i.e. portions of the multilayer packaging material can be sealed to one another).

In further detail, the multilayer packaging material may comprise at least one layer of fibrous material, such as e.g. paper or cardboard, and at least two layers of heat-seal plastic material, e.g. polyethylene, interposing the layer of fibrous material in between one another. Preferentially, one of these two layers of heat-seal plastic material may define the inner face of packages 2 contacting the pourable product.

Moreover, the multilayer packaging material may also comprise a layer of gas- and light-barrier material, e.g. aluminum foil or ethylene vinyl alcohol (EVOH) film, preferentially being arranged between one of the layers of the heat-seal plastic material and the layer of fibrous material.

Preferentially, the packaging material may also comprise a further layer of heat-seal plastic material being interposed between the layer of gas- and light-barrier material and the layer of fibrous material.

In further detail, the multilayer packaging material may be provided in the form of a web 3.

Preferentially, web 3 comprises successively arranged patterns, each pattern defining a final graphical pattern of the respective package 2. In other words, packaging machine 1 operates, in use, such to guarantee that packages 2 comprise the respective pattern.

Furthermore, packaging machine 1 may be configured to produce packages 2 by forming a tube 4 from web 3, longitudinally sealing tube 4, filling tube 4 with the pourable product and to transversally seal, and preferentially transversally cut tube 4.

Preferentially, tube 4 may extend along a central axis A, more preferentially having a vertical orientation.

According to some possible non-limiting embodiments, each package 2 may extend along a longitudinal axis.

According to some possible embodiments, each package 2 may comprise at least a first transversal sealing band 5 arranged at a first end of package 2, and preferentially also a second transversal sealing band arranged at a second end of package 2 opposite to the first end.

Preferentially, each first transversal sealing band 5 may be substantially spaced apart from the respective second transversal sealing band along the respective longitudinal axis.

Preferentially, each first transversal sealing band 5 may define a top transversal sealing band and each second transversal sealing band may define a bottom transversal sealing band.

According to some preferred non-limiting embodiments, each first transversal sealing band 5 and the respective second transversal sealing band may be laterally displaced from one another.

In other words, a projection of first transversal sealing band 5 and a projection of the respective second transversal sealing band on a plane perpendicular to the respective longitudinal axis are laterally displaced from one another, in particular parallel to one another and laterally displaced from one another.

More specifically, each first transversal sealing band 5 and each second transversal sealing band may comprise, respectively, a first central line and a second central line extending along the longest extension of, respectively, first transversal sealing band 5 and the second transversal sealing band. In particular, when considering a projection of the first transversal sealing band 5 and the respective second transversal sealing band on a plane perpendicular to the respective longitudinal axis, the respective first central line and the respective second central line are laterally displaced from one another, in particular parallel to one another and laterally displaced from one another.

According to some preferred non-limiting embodiments, each first transversal sealing band 5 may be laterally displaced from the respective longitudinal axis and the respective second transversal sealing band may be aligned with respect to the respective longitudinal axis.

In other words, each longitudinal axis intersects the respective second central line, but does not intersect the respective first central line.

Moreover, each package 2 may also comprise a longitudinal seam portion 6. Preferentially, each first transversal sealing band 5 and/or each second transversal sealing band may be transversal, preferentially perpendicular, to the respective longitudinal seam portion 6.

Moreover, each package 2 may comprise at least a first wall 7, preferentially having the respective first transversal sealing band 5, and a second wall axially displaced from first wall 7, and preferentially having the second transversal sealing band. Additionally, each package 2 may also comprise a side wall 9 interposed between and connected to first wall 7 and the second wall.

Preferentially, the second wall may define a bottom wall and the respective first wall 7 may define a top wall. Preferentially, the bottom wall may have a support surface adapted to be placed on a (horizontal) plane, such as e.g. a shelf within a distribution point, and the top wall may be opposite to the bottom wall.

According to some preferred non-limiting embodiments, the longitudinal axis may be perpendicular to the respective second wall. Moreover, at least a portion of first wall 7 may be inclined with respect to the longitudinal axis, i.e. the longitudinal axis and first wall 7 may deviate from being substantially orthogonal. In other words, while the longitudinal axis is substantially perpendicular to the second wall, the longitudinal axis is not substantially perpendicular to first wall 7.

Additionally, each first wall 7 and the respective second wall may not be parallel to one another.

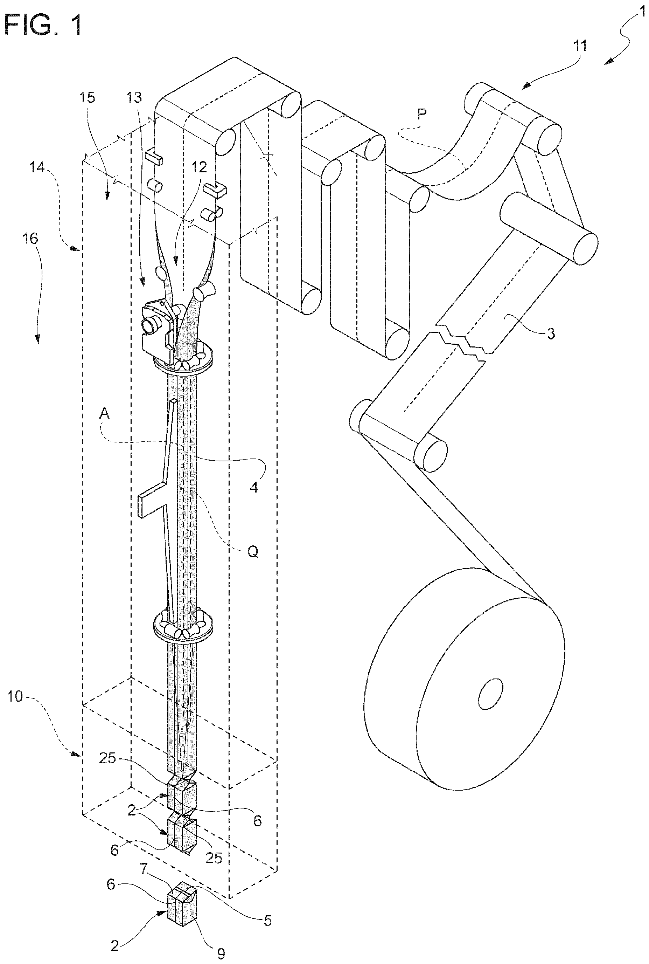

With particular reference to Figure 1, packaging machine 1 may comprise a package forming apparatus 10 configured to transversally seal, and preferentially to transversally cut tube 4 for obtaining semi-finalized packs, preferentially package pouches. Preferentially, package forming apparatus 10 may also be configured to form tube 4.

Additionally packaging machine 1 may comprise a final folding apparatus configured to receive the semi-finalized packs from package forming apparatus 10 and to form packages 2 from the semi-finalized packs.

Moreover, packaging machine 1 may also comprise:
- a conveying device 11 configured to advance web 3 along a web advancement path P, preferentially to a tube forming station, at which, in use, web 3 is formed into tube 4, and configured to advance tube 4 along a tube advancement path Q;
- a tube forming and sealing device 12 configured to form tube 4 from the, in use, advancing web 3 and to longitudinally seal tube 4; and
- a filling device 13 for filling tube 4 with the pourable product.

In further detail, packaging machine 1 may also comprise an isolation chamber 14, preferentially delimiting an inner environment 15 from an outer environment 16. Preferentially, inner environment 15 may be a sterile environment, preferably containing a controlled atmosphere.

Preferentially, tube forming and sealing device 12 may be at least partially arranged within isolation chamber 14, in particular inner environment 15, and being configured to fold and longitudinally seal tube 4 within isolation chamber 14, in particular inner environment 15.

Moreover, packaging machine 1 may also comprise a sterilization unit configured to sterilize the, in use, advancing web 3, preferentially the sterilization unit being arranged upstream of tube forming and sealing device 12 along web advancement path P.

In more detail, conveying device 11 may be configured to advance tube 4 and any intermediates of tube 4 along tube advancement path Q, preferentially from tube forming and sealing device 12 to and/or at least partially within package forming apparatus 10. Preferentially, with the wording intermediates of tube 4 any configuration of web 3 is meant prior to obtaining the tube structure and after folding of web 3 by tube forming and sealing device 12 has started. In other words, the intermediates of tube 4 are a result of the gradual folding of web 3 so as to obtain tube 4, preferentially by overlapping the (longitudinal) edges of web 3 with one another.

According to some possible non-limiting embodiments, tube forming and sealing device 12 may be arranged such that tube 4 has a vertical orientation.

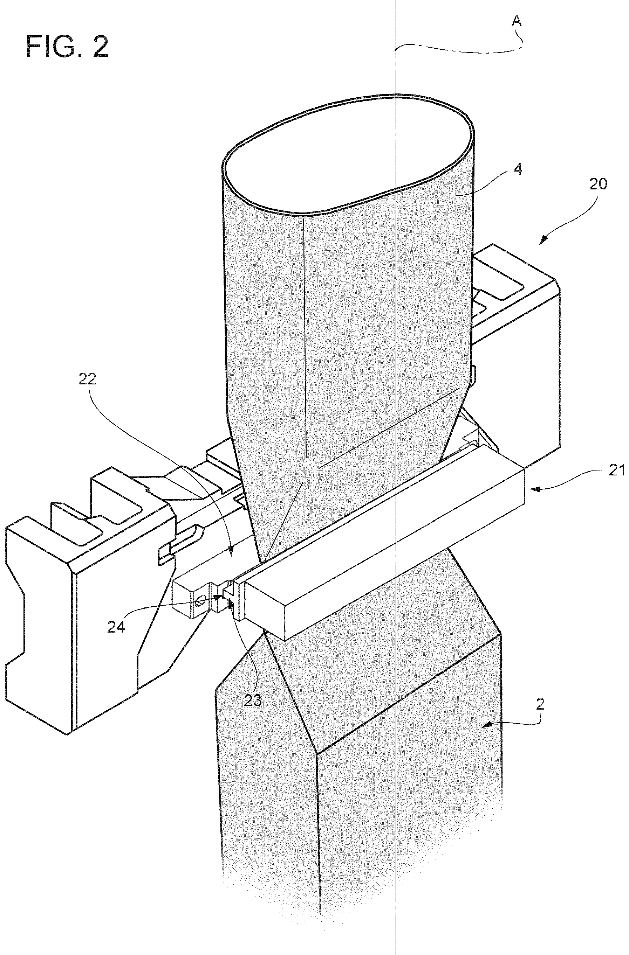

With particular reference to Figures 1 and 2, package forming apparatus 10 may comprise one or more, preferentially a plurality of, operative devices 20, each one configured to manipulate, preferentially at least partially form and/or transversally seal and/or to transversally cut, tube 4.

Preferentially, package forming apparatus 10 may be configured to control each operative device 20 such to at least partially form tube and/or to transversally seal and transversally cut tube 4 along equally spaced transversal cross sections.

According to some possible non-limiting embodiments, package forming apparatus 10 may comprise at least two operative devices 20, preferentially exactly two.

In further detail and with particular reference to Figure 2, each operative device 20 may comprise at least a first operative group 21 and a second operative group 22 configured to cooperate with one another for at least partially forming and/or for transversally sealing and/or for transversally cutting, tube 4.

Preferentially, each first operative group 21 and the respective second operative group 22 may be movable with respect to one another, preferentially so as to move each first operative group 21 and the respective second operative group 22 towards and away from one another.

In more detail, each operative device 20 may be controllable between an active configuration, in which the respective first operative group 21 and the respective second operative group 22 are approached to one another to at least partially form, preferentially to also transversally seal and/or to transversally cut, tube 4 and a rest configuration, in which the respective first operative group 21 and the respective second operative group 22 are withdrawn from one another.

Moreover, package forming apparatus 10 may also comprise a conveying unit configured to advance each first operative group 21 and each second operative group 22 along respective advancement paths.

In more detail, each advancement path may comprise an operative portion along which the respective first operative group 21 and the respective second operative group 22 advance, in use, in a direction of advancement of tube 4 and a return portion along which each first operative group 21 and each second operative group 22 advance, in use, in a direction opposite to the direction of advancement of tube 4 so as to bring each first operative group 21 and each second operative group 22 back to the respective operative portion. According to the specific embodiment disclosed, each operative portion and the respective return portion are substantially coincident, the respective first operative group 21 and the respective second operative group 22 moving in opposite directions when advancing, in use, along the respective operation portion and the respective return portion.

Moreover, each operative device 20 may be controlled from the respective rest configuration to the respective active configuration during advancement of the respective first operative group 21 and the respective second operative group 22 along the respective operative portion, preferentially for at least partially forming, more preferentially for transversally sealing and/or transversally cutting, tube 4.

In even further detail, in use, after completion of the at least partial forming, preferentially of also the transversal sealing and transversal cutting, of tube 4, each operative device 20 may be controlled back to the respective rest configuration.

In other words, during advancement of each first operative group 21 and the respective second operative group 22 along the respective operative portions, each first operative group 21 and the respective second operative group 22 may be moved towards one another. After termination of the partial forming and/or the transversal sealing and/or the transversal cutting, of tube 4, each first operative group 21 and the respective second operative group 22 are withdrawn from one another.

According to some non-limiting embodiments, package forming apparatus 10 may comprise two, preferentially exactly two, operative devices 20.

With particular reference to Figures 2 to 6, each operative device 20 comprises a first element 23 and a second element 24 configured to at least transversally compress tube 4 along a respective cross-section 25.

More specifically, each first element 23 and the respective second element 24 may be configured to compress, preferentially to flat-lay and squeeze tube 4 during advancement of tube 4 along tube advancement path Q.

Preferentially, each first element 23 and the respective second element 24 may be configured to also transversally seal tube 4 along the respective cross-section 25. In other words, each first element 23 and the respective second element 24 may define at least a portion of a sealing device of the respective operative device 20.

In particular, each cross-section 25 may define, once sealed a respective transversal sealing band, comprising the first transversal sealing band 5 of a first package 2 and the second transversal sealing band of a second package 2.

According to some preferred non-limiting embodiments, each first operative group 21 may comprise the respective first element 23 and the respective second operative group 22 may comprise the respective second element 24.

In further detail, each first element 23 may comprise a source configured to generate the energy needed to obtain the sealing effect, preferentially obtaining a heating of the packaging material. For example, first element 23 may be a sonotrode having ultrasound-emitters or first element 23 may have an electromagnetic induction source. Each second element 24 may be a passive element (i.e. not having an active source) . For example, second element 24 may be a metal anvil or a deformable pad.

Advantageously, each first element 23 and the respective second element 24 are controllable between an open configuration in which first element 23 and the respective second element 24 are withdrawn from one another (so as to be, in use, laterally detached from tube 4) and a closed configuration in which first element 23 and the respective second element 24 transversally compress, preferentially to flat-lay and squeeze, tube 4 along the respective cross-section 25. Preferentially, with first element 23 and second element 24 being in the open configuration, first element 23 and second element 24 do not interact with tube 4.

Preferentially, each first element 23 and the respective second element 24 may be controlled in the respective open configuration and the respective closed configuration with the respective first operative group 21 and the respective second operative group 22 being, respectively, withdrawn from and approached to one another.

More preferentially, each first element 23 and the respective second element 24 may be movable between the respective closed configuration and the respective open configuration independently and/or differently from one another, i.e. movement of first element 23 may not be coupled to movement of second element 24 and/or first element 23 may move differently from the respective second element 24. For example, the movement, in particular the linear movement, of each first element 23 and the movement, in particular the linear movement, of the respective second element 24 may have different motion profiles and/or movement speeds and/or traveling distances and/or traveling times.

Alternatively or additionally, each first element 23 and the respective second element 24 may be configured to linearly move between the respective closed configuration and the respective open configuration. Preferentially, each first element 23 and the respective second element 24 are not subjected to an angular movement when moving between the respective closed configuration and the respective open configuration.

In more detail, each first element 23 and the respective element 24 may be moveable along a respective movement direction preferentially transversal, more preferentially perpendicular, to central axis A.

Each first element 23 and the respective second element 24 may be controlled in the respective open configuration and the respective closed configuration with the respective operative device 20 being controlled in the rest configuration and in the active configuration, respectively.

Additionally, each operative device 20 may comprise at least one cutting assembly configured to transversally cut tube 4 along the respective cross-sections 25. Preferentially, each cutting assembly may be configured to transversally cut tube 4 after sealing of tube 4 by means of the respective first element 23 and the respective second element 24.

Each cutting assembly may comprise a cutting blade being associated with one of the respective first operative group 21 and the respective second operative group 22, preferentially with the respective second operative group 22.

Preferentially, cutting assembly may be configured to transversally cut the respective cross-section 25, thereby forming a first portion connected to tube 4 (and being part of a package 2 still to be finalized) and a second portion being part of the respective package 2 being detached from tube 4 by means of the cutting operation. Additionally, the first portion may define a respective first transversal sealing band 5 of a package 2 still to be finalized and the second portion may define a respective second transversal sealing band of the package 2 being detached from tube 4.

With particular reference to Figures 2 to 6, each operative device 20 may also comprise a shell assembly 26 controllable between an operative configuration in which shell assembly 26 is configured to at least partially form tube 4 and an idle configuration in which shell assembly 26 is configured to be detached from tube 4. In the specific case shown in Figures 2 to 6, the shell assembly 26 being in the lower part is shown while being in the respective operative configuration and the shell assembly 26 being in the upper part is shown while moving from the idle configuration to the operative configuration.

In more detail, each shell assembly 26 may comprise a first half-shell 27 and a second half-shell 28 configured to at least partially form in cooperation tube 4 with shell assembly 26 being in the respective operative configuration.

Preferentially, each first half-shell 27 and the respective second half-shell 28 may be configured to engage tube 4 from opposite sides thereof with the respective shell assembly 26 being in the respective operative configuration.

In further detail, each first operative group 21 comprises the respective first half-shell 27 of the respective shell assembly 26 and the respective second operative group 22 comprises the respective second half-shell 28 of the respective shell assembly 26.

According to some preferred non-limiting embodiments, each shell assembly 26 may be in the respective operative configuration and the respective idle configuration with the respective operative device 20 being in, respectively, the respective active configuration and the respective rest configuration.

According to some preferred non-limiting embodiments, each first half-shell 27 and the respective second half-shell 28 may be withdrawn from and approached to one another with the respective shell assembly 26 being in, respectively, the respective idle configuration and the respective operative configuration.

According to some possible embodiments, movement of each first half-shell 27 and of the respective second half-shell 28 may comprise an angular movement for controlling the respective shell assembly 26 in the respective idle configuration and the respective operative configuration.

According to some possible embodiments, each first half-shell 27 is rotatably coupled to the first element 23 and each second half-shell 28 is rotatably coupled to the second element 24.

Alternatively, movement of each first half-shell 27 and of the respective second half-shell 28 may comprise only a linear movement for controlling the respective shell assembly 26 in the respective idle configuration and the respective operative configuration.

According to some preferred non-limiting embodiments, each first half-shell 27 and the respective second half-shell 28 may define and/or may be coaxial to central axis A when being in the respective operative configuration.

According to some preferred non-limiting embodiments, each first element 23 and the respective second element 24 may be coupled and/or associated to one respective shell assembly 26.

In more detail, each first element 23 may be coupled and/or associated to the respective first half-shell 27 and each second element 24 may be coupled and/or associated to the respective second half-shell 28.

According to some possible embodiments, movement of each first element 23 and the respective first half-shell 27 may be dependent on one another or may be independent from one another. Additionally, movement of each second element 23 and the respective second half-shell 28 may be dependent on one another or may be independent from one another.

According to some preferred embodiments, package forming apparatus 10 comprises a control unit configured to at least selectively control each first element 23 and the respective second element 24 between the respective closed configuration and the respective open configuration.

Preferentially, the control unit may be configured to move each first element 23 and the respective second element 24 between the respective closed configuration and the respective open configuration independently from one another.

Alternatively or additionally, the control unit may be configured to linearly move each first element 23 and the respective second element 24 between the respective closed configuration and the respective open configuration, preferentially along the respective movement direction.

In order to be controlled from the respective open configuration to the respective closed configuration, the first element 23 and the second element 24 are moved towards one another, preferentially linearly moved towards one another along the movement direction.

Preferentially, the control unit may also be configured to control each operative device 20 between the respective active configuration and the respective rest configuration and/or each shell assembly 26 between the respective operative configuration and the respective idle configuration.

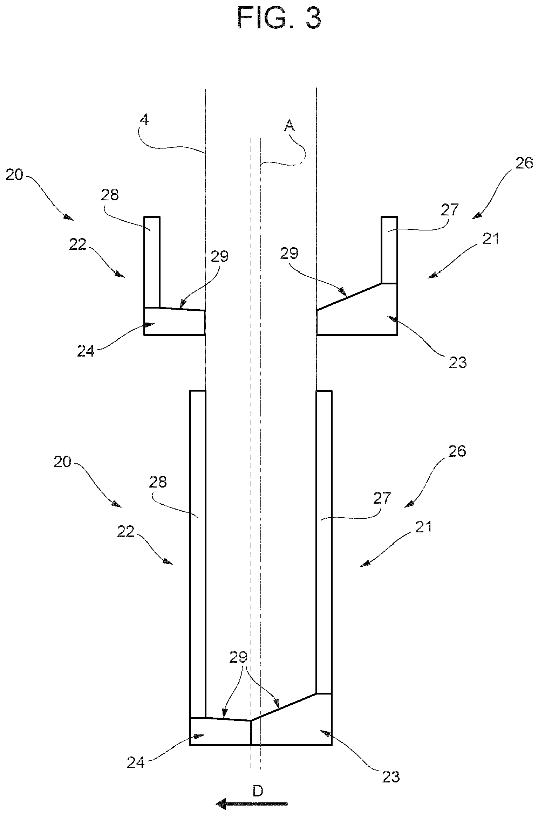

According to the example shown in Figures 3 to 6, shell assembly 26 may be controlled in the respective operative configuration during control of the respective first element 23 and the respective second element 24 in the respective closed configuration.

Advantageously and with particular reference to Figures 3 to 6, the control unit is also configured to move each first element 23 and the respective second element 24 along a displacement direction D transversal, preferentially perpendicular, to central axis A. Preferentially, the control unit is configured to move each first element 23 and the respective second element 24 along displacement direction D while the first element 23 and the second element 24 are in the closed configuration. In other words, the control unit is configured to move each first element 23 and the respective second element 24 along displacement direction D after controlling first element 23 and the respective second element 24 in the respective closed configuration and while maintaining the first element 23 and the respective second element 24 in the closed configuration.

Preferentially, the control unit is configured to move the first element 23 and the respective second element 24 together, i.e. as a single body, along displacement direction D.

In this way, the respective cross-section 25 is also transversally moved.

Preferentially, displacement direction D and the movement direction of each first element 23 and the respective second element 24 may be parallel to one another.

In more detail, each cross-section 25 defines a respective central plane being (substantially) parallel to central axis A.

According to some preferred non-limiting embodiments, after the respective first element 23 and the respective second element 24 have been controlled in the respective closed configuration and prior to the movement along displacement direction D each cross-section 25 may be laterally displaced from central axis A.

In other words, prior to the movement of the respective first element 23 and the respective second element 24 along displacement direction D the respective central plane is laterally displaced from central axis A.

Moreover, movement of each first element 23 and the respective second element 24 (as a single body) along displacement direction D with the respective operative device 20 being controlled in the respective active configuration (i.e. with first element 23 and the respective second element 24 being in the closed configuration) is such that, the respective cross-section 25 remains laterally displaced from central axis A. More preferentially, movement along displacement direction D is such that each cross-section 25 is further laterally displaced from central axis A.

Moreover, after the movement of the respective first element 23 and the respective second element 24 (as a single body) along displacement direction D the respective central plane remains parallel to and laterally displaced from the respective central axis A.

Alternatively, after the respective first element 23 and the respective second element 24 have been controlled in the respective closed configuration and prior to the movement along displacement direction D each cross-section 25 may be coaxial to central axis A. Afterwards, during movement of the respective first element 23 and the respective second element 24 as a single body along displacement direction D, the respective cross-section 25 may be laterally displaced from central axis A.

According to some preferred non-limiting embodiments, the control unit may be configured to move each first element 23 and the respective second element 24 when being arranged in the closed configuration and prior to a cutting operation of the respective cutting assembly has been, in use, executed.

According to some preferred non-limiting embodiments, the control unit may also be configured to simultaneously move each shell assembly 26 and the respective first element 23 and the respective second element 24 along displacement direction D.

Preferentially, the lateral displacement of each cross-section 25 after control of the respective first element 23 and the respective second element 24 in the closed configuration (and prior to the movement as a single body along displacement direction D) is obtained by appropriate shapes and/or designs of each first element 23 and the respective second element 24.

Preferentially, the control unit may be configured to move as a whole, i.e. as a single body, each first operative group 21 and the respective second operative group 22 along displacement direction D after setting the respective first element 23 and the respective second element 24 in the respective closed configuration.

In particular, the control unit may be configured to move the respective first half-shell 27 and the respective second half-shell 28 along displacement direction D for moving shell assembly 26 along displacement direction D. Thus, not only first element 23 and second elements 24 are moved, in use, along displacement direction D, but also the respective first half-shell 27 and the respective second half-shell 28.

With particular reference to Figures 3 to 6, each first element 23 and the respective second element 24 may comprise a respective engagement surface 29 configured to engage tube 4 so as to at least partially shape the respective first wall 7 of the respective package 2. Preferentially, the at least one of engagement surfaces 29 may be inclined with respect to central axis A.

Preferentially, web 3 may comprise a plurality of crease lines along which tube 4 is to be folded and at least partially defining the shape of package 2. In particular, each first element 23 and the respective second element 24 may be designed according to the crease lines.

Moreover, the crease lines are successively repeated according to the repeated patterns.

In particular, the crease lines define the desired positions of the respective first sealing band 5 and the respective second sealing band.

According to some preferred non-limiting embodiments, during control of each first element 23 and the respective second element 24 along the movement direction, the respective crease lines allow for a desired formation of cross-sections 25. In other words, while, in use, the control unit controls first element 23 and the respective second element 24 along the movement direction, the respective crease lines guide formation of the respective cross-section 25.

In use, packaging machine 1 produces packages 2 filled with the pourable product.

In more detail, conveying device 11 advances web 3 along web advancement path P. Tube forming and sealing device 12 forms tube 4 from the advancing web 3 and longitudinally seals tube 4. Additionally, filling device 13 fills tube 4 with the pourable product and package forming apparatus 10 at least partially forms, transversally seals and transversally cuts tube 4 so as to obtain packages 2.

In further detail, during operation of package forming apparatus 10, operative devices 20 manipulate, preferentially at least partially form tube 4 and/or preferentially also transversally seal and preferentially cut tube 4.

During operation of each operative device 20, the respective first operative group 21 and the respective second operative group 22 are cyclically moved towards and withdrawn from one another.

Additionally, shell assemblies 26 are cyclically controlled between the respective idle configurations and the respective operative configurations.

Moreover, also first elements 23 and the respective second elements 24 are cyclically controlled between the respective closed configuration and the respective open configuration.

In more detail, each package 2 is formed through a series of steps. Moreover, these steps are cyclically repeated so as to continuously form packages 2.

More specifically, during each cycle a step of controlling is executed during which a respective first element 23 and the respective second element 24 are controlled from the respective open configuration to the respective closed configuration so as to transversally compress tube 4 along the respective cross-section 25.

Moreover, a step of moving is executed, during which the respective first element 23 and the respective second element 24 are moved along displacement direction D. In particular, each step of moving is executed after execution of the respective step of controlling and while retaining the respective first element 23 and the respective second element 24 in the respective closed configuration.

Additionally, a step of releasing is executed during which the respective first element 23 and the respective second element 24 are controlled back to the respective open configuration.

In further detail, after the step of controlling and prior to the execution of the step of moving, each cross-section 25 may be in a position that is transversally displaced from central axis A.

Alternatively, after the step of controlling and prior to the execution of the step of moving, each cross-section 25 may be coaxial with central axis A.

Additionally or alternatively, after the step of controlling and the step of moving, each respective cross-section 25 is and/or remains transversally displaced from central axis A.

According to some preferred non-limiting embodiments, also a step of transversally sealing is executed, during which the respective first element 23 and the respective second element 24 seal in cooperation with one another the respective compressed cross-section 25.

Moreover, a step of cutting is executed, during which the compressed cross-section 25 is transversally cut, preferentially by the respective cutting assembly. Advantageously, each step of moving is executed before the respective step of cutting is executed.

According to some preferred non-limiting embodiments, a step of setting is executed, during which the respective shell assembly 26 is set in the respective operative configuration so as to at least partially form tube 4.

Moreover, during the respective step of moving, also the respective shell assembly 26 is moved along displacement direction D, and preferentially during the step of releasing the respective shell assembly 26 is moved in the respective idle configuration.

In further detail, preferentially, during the step of moving, the respective first half-shell 27 and the respective second half-shell 28 are moved along displacement direction D for moving the respective shell assembly 26 along displacement direction D.

A cycle of the formation of a package 2 is partially shown in Figures 3 to 6. Figure 3 illustrates the presence of two operative devices 20, one of which having the respective first element 23 and the respective second element 24 being in the closed configuration and the other one having the respective first element 23 and the respective second element 24 being in a position intermediate between the open configuration and the closed configuration.

One notes in Figure 3 that the cross-section 25 formed between the respective first element 23 and the respective second element 24 being in the closed configuration is laterally displaced from central axis A. Alternatively, after the step of controlling and prior to the execution of the step of moving, each cross-section 25 may be coaxial with central axis A.

Additionally, the respective first element 23 and the respective second element 24 being in the intermediate configuration have started to touch tube 4. According to some possible embodiments, first element 23 and second element 24 may be symmetrically arranged with respect to longitudinal axis A.

It should be noted that the respective shell-assembly 26 associated to first element 23 and the respective second element 24 being in the respective open configuration is still controlled in the respective idle configuration, in Figure 3.

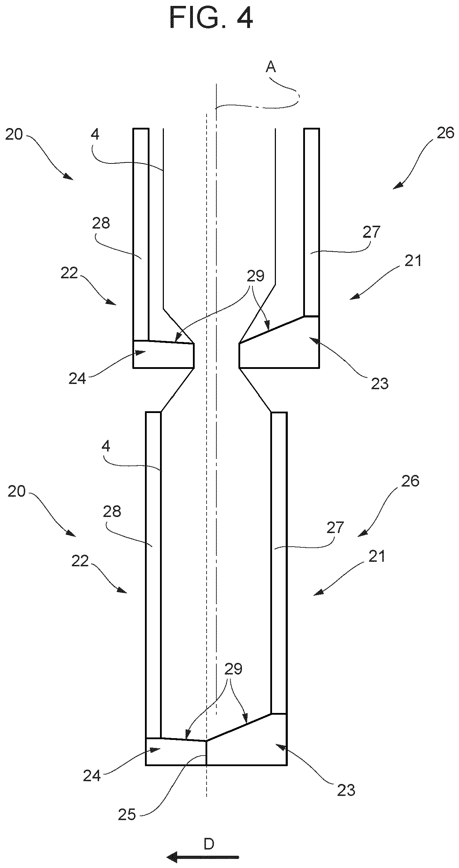

Moreover, during the sequence as shown in Figures 4 to 6, the respective shell-assembly 26 is controlled from the respective idle configuration to the respective operative configuration during and/or after movement of the respective first element 23 and the respective second element 24 from the respective open configuration to the respective closed configuration.

The sequence of controlling first element 23 and second element 24 from the respective open configuration to the respective closed configuration is shown in Figures 4 to 6.

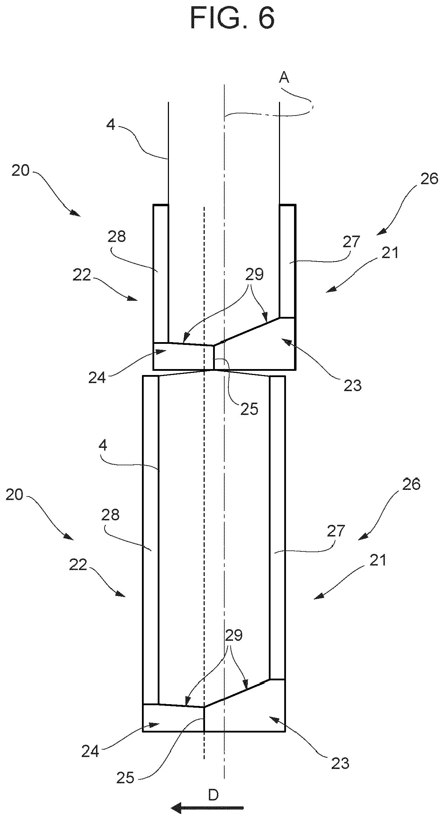

In particular, one notes that the respective first element 23 and the respective second element 24 being shown in the upper part of Figures 4 to 6 are moved towards one another until finally being controlled in the respective closed configuration (see Figure 6).

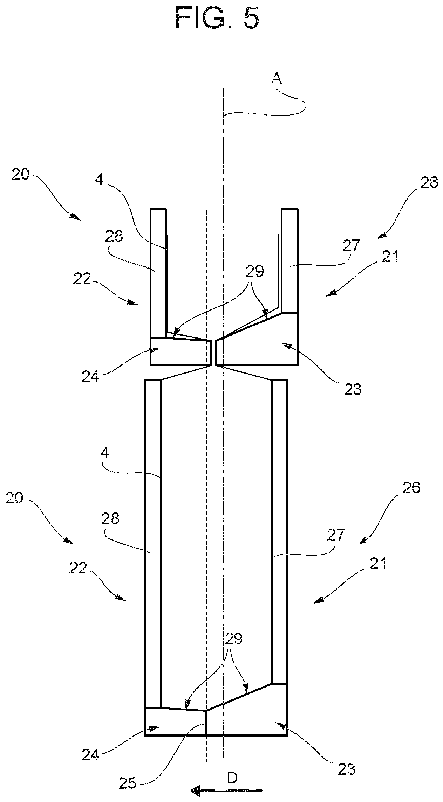

Moreover one notes in Figures 5 and 6 that the respective first element 23 and the respective second element 24 being shown in the lower part of Figure 6 are moved as a single body along displacement direction D. On the contrary, the respective first element 23 and the respective second element 24 shown in the upper part of Figure 6 have not been moved as a single body along displacement direction D yet. Still, the respective cross-section 25 as formed between the respective first element 23 and the respective second element 24 shown in the upper part of Figure 6 is already laterally displaced from central axis A.

Then, the cross-section 25 of the respective first element 23 and the respective second element 24 shown in the lower part of Figure 6 is transversally cut.

Afterwards, also the respective first element 23 and the respective second element 24 shown in the upper part of Figure 6 will be laterally displaced as a single body along displacement direction D.

Then, the cross-section 25 formed between the first element 23 and the respective second element 24 shown in the upper part of Figure 6 is transversally cut.

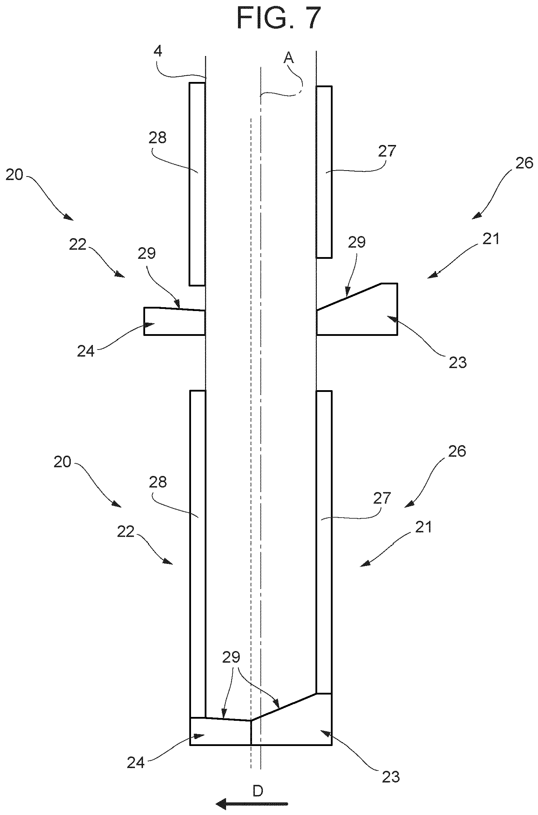

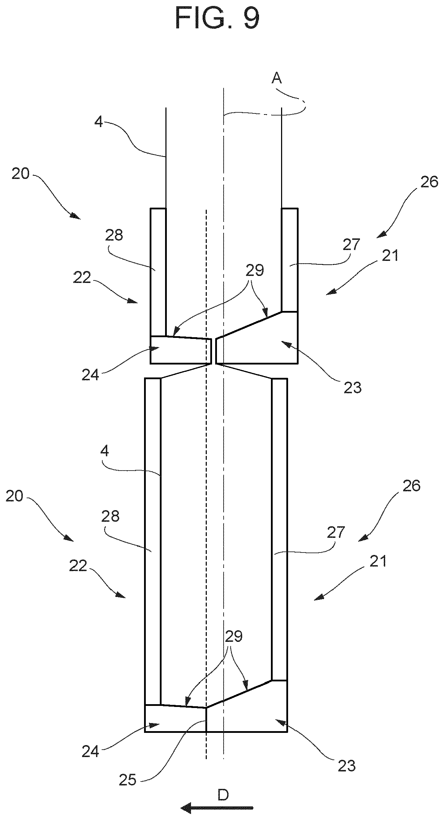

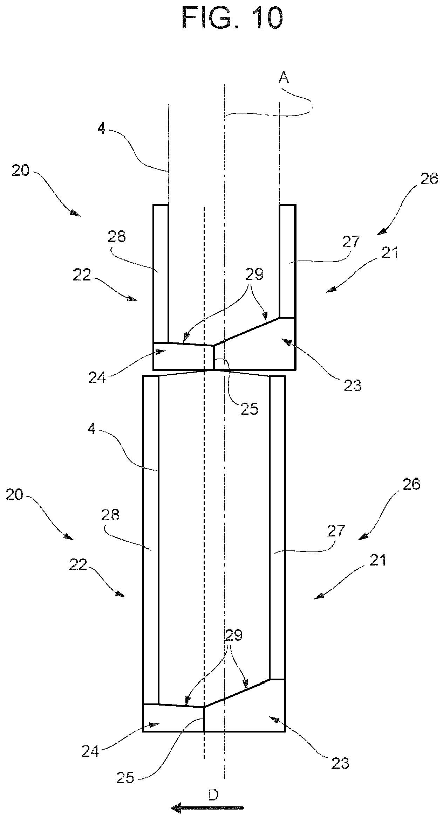

With reference to Figures 7 to 10, an alternative embodiment of a packaging apparatus according to the present invention is shown. The following description of the embodiment of Figures 7 to 10 is limited to the differences with respect to the embodiment of Figures 3 to 6, and using the same references, where possible, for identical or corresponding parts.

According to the embodiment of Figures 7 to 10, each shell assembly 26 may be controlled in the respective operative configuration prior to controlling the respective first element 23 and the respective second element 24 in the respective closed configuration.

In particular, according to such a solution, each shell assembly 26 may be controlled in the respective operative configuration prior to initiating movement of the respective first element 23 and the respective second element 24 from the respective open configuration to the respective closed configuration.

Alternatively, the respective first element 23 and the respective second element 24 may start to move from the respective open configuration to the respective closed configuration prior to the respective shell assembly 26 being finally controlled in the respective operative configuration. However, the respective shell assembly 26 still reaches the respective operative configuration prior to the respective first element 23 and the respective second element 24 having reached the respective closed configuration.

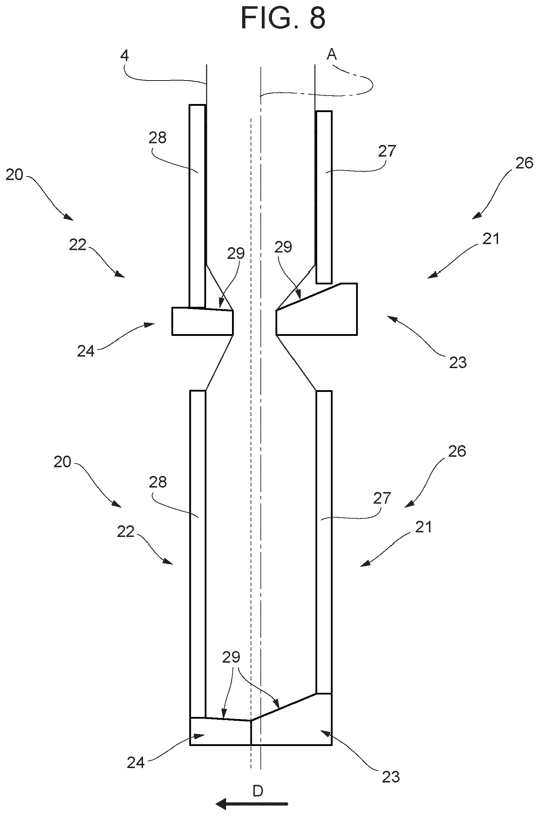

It should be noted that the respective shell-assembly 26 associated to first element 23 and the respective second element 24 being in the respective open configuration in Figure 7 have already been controlled in the respective operative configuration. The sequence of controlling first element 23 and second element 24 from the respective open configuration to the respective closed configuration is shown in Figures 8 to 10. The sequence is substantially identical to the one of Figures 4 to 6, with the only difference that the respective shell assembly 26 is already in the respective operative configuration.

Accordingly, the packaging apparatus 10 according to the embodiment of Figures 7 to 10 operates in a similar way as the one of Figure 3 to 6, with the difference that each shell assembly 26 is controlled in the respective operative configuration prior to controlling the respective first element 23 and the respective second element 24 in the respective closed configuration.

The advantages of package forming apparatus 10 and/or packaging machine 1 according to the present invention will be clear from the foregoing description.

In particular, by avoiding inclination of tube 4 one guarantees a gentle package 2 production.

Additionally, it is possible to achieve an easy control of the package forming process.

Clearly, changes may be made to package forming apparatus 10 and/or packaging machine 1 as described herein without, however, departing from the scope of protection as defined in the accompanying claims.

## Claims

1. Package forming apparatus (10) for a packaging machine (1), the package forming apparatus (10) being configured to manipulate a tube (4) extending along a central axis (A) for obtaining packages (2) from the tube (4);
wherein the package forming apparatus (10) comprises at least one operative device (20) configured to at least partially form the tube (4) and the at least one operative device (20) comprises at least a first element (23) and a second element (24) configured to at least transversally compress the tube (4) along a respective cross-section (25);
wherein each first element (23) and the respective second element (24) are controllable between an open configuration in which the first element (23) and the respective second element (24) are distanced from one another and a closed configuration in which the first element (23) and the respective second element (24) transversally compress the tube (4) along the respective cross-section (25) ;
wherein the package forming apparatus (10) comprises a control unit configured to selectively control each first element (23) and the respective second element (24) between the respective open configuration and the respective closed configuration;
wherein the control unit is configured to move each first element (23) and the respective second element (24) between the respective open configuration and the respective closed configuration independently and/or differently from one another and/or the control unit is configured to linearly move each first element (23) and the respective second element (24) between the respective open configuration and the respective closed configuration;
wherein the control unit is also configured to move each first element (23) and the respective second element (24) along a displacement direction (D) transversal to the central axis (A) and while each first element (23) and the respective second element (24) are in the closed configuration.

2. Package forming apparatus according to claim 1, wherein each first element (23) and the respective second element (24) are configured such that after having been controlled in the closed configuration and prior to the movement along the displacement direction (D) the respective cross-section (25) is transversally displaced from the central axis (A) or is coaxial with the central axis (A); and/or
wherein each first element (23) and the respective second element (24) are configured such that after having been controlled in the closed configuration and after movement along the displacement direction (D), the respective cross-section (25) is and/or remains transversally displaced from the central axis (A).

3. Package forming apparatus according to claim 1 or 2, wherein each first element (23) and the respective second element (24) are configured to transversally seal in cooperation with one another the tube (4) along the respective cross-section (25).

4. Package forming apparatus according to any one of the preceding claims, wherein each operative device (20) comprises a cutting assembly configured to transversally cut the tube (4) along the respective cross-section (25);
wherein the control unit is configured to move each first element (23) and the respective second element (24) along the displacement direction (D) after having been controlled in the closed configuration and before execution of a cutting operation performed by the respective cutting assembly.

5. Package forming apparatus according to any one of the preceding claims, wherein each operative device (20) comprises a shell assembly (26) controllable between an operative configuration in which the shell assembly (26) is configured to at least partially form the tube (4) and an idle configuration in which the shell assembly (26) is configured to be detached from the tube (4);
wherein the control unit is configured to control the shell assembly (26) between the operative configuration and the idle configuration;
wherein the control unit is also configured to move the shell assembly (26) and the respective first element (23) and the respective second element (24) along the displacement direction (D).

6. Package forming apparatus according to any one of the preceding claims, wherein the shell assembly (26) comprises a first half-shell (27) and a second half-shell (28) approached to one another and withdrawn from one another with the shell assembly (26) being controlled in, respectively, the operative configuration and the idle configuration;
wherein the first element (23) is associated to the first half-shell (27) and the second element (24) is associated to the second half-shell (28);
wherein the control unit is configured to move the first half-shell (27) and the second half-shell (28) along the displacement direction (D) for moving the shell assembly (26) along the displacement direction (D).

7. Package forming apparatus according to claim 6, wherein the first element (23) and the second element (24) comprise respective engagement surfaces (29) configured to engage the tube (4) so as to shape a respective transversal wall (7) of the respective package (2);
wherein at least one of the engagement surfaces (29) is inclined with respect to the central axis (A).

8. Packaging machine (1) for forming packages (2) of a pourable product from an advancing tube (4) formed and longitudinally sealed from a web of packaging material (3);
the packaging machine (1) comprises:
- a conveying device (11) configured to advance the web of packaging material (3) along a web advancement path (P) and to advance the tube (4) along a tube advancement path (Q) ;
- a tube forming and sealing device (12) configured to form the tube (4) from the web of packaging material (3) and to longitudinally seal the tube (4);
- a filling device (13) for filling the tube (4) with the pourable product; and
- a package forming apparatus (10) according to any one of the preceding claims for forming the packages (2) from the tube (4).

9. Method for forming packages (2) from a tube (4) extending along a central axis (A) comprising at least the steps of:
- controlling a first element (23) and a second element (24) from an open configuration in which the first element (23) and the respective second element (24) are distanced from one another to a closed configuration in which the first element (23) and the respective second element (24) transversally compress the tube (4) along a respective cross-section (25); and
- moving the first element (23) and the second element (24) in a direction transversal to the central axis (A) after controlling the first element (23) and the second element (24) in the closed configuration and while retaining the first element (23) and the second element (24) in the closed configuration.

10. Method according to claim 9, wherein after the step of controlling and prior to the execution of the step of moving, the respective cross-section (25) is transversally displaced from the central axis (A) or is coaxial with the central axis (A); and/or
wherein after the step of controlling and the step of moving, the respective cross-section (25) is and/or remains transversally displaced from the central axis (A).

11. Method according to claim 9 or 10, and further comprising the step of transversally sealing, during which the first element (23) and the second element (24) seal in cooperation with one another the respective cross-section (25) .

12. Method according to any one of claims 9 to 11, and further comprising a step of cutting, during which the cross-section (25) is transversally cut;
wherein the step of moving is executed before the step of cutting.

13. Method according to any one of claims 9 to 12, and further comprising a step of setting, during which a shell assembly (26) is set in an operative configuration so as to at least partially form the tube (4);
wherein during the step of moving, also the shell assembly (26) is moved along the displacement direction (D).

14. Method according to any one of claims 9 to 13, wherein the shell assembly (26) comprises a first half-shell (27) and a second half-shell (28) approached to one another with the shell assembly (26) being controlled in the operative configuration;
wherein the first element (23) is associated to the first half-shell (27) and the second element (24) is associated to the second half-shell (28);
wherein during the step of moving, the first half-shell (27) and the second half-shell (28) are moved along the displacement direction (D) for moving the shell assembly (26) along the displacement direction (D).

15. Method according to any one of claims 9 to 14, wherein the first element (23) and the second element (24) comprise each a respective engagement surface (29) configured to engage the tube (4) so as to shape a respective transversal wall (7) of the respective package (2);
wherein at least one of the engagement surfaces (29) is inclined with respect to the central axis (A).
